# EUROPEAN PATENT SPECIFICATION

(11) **EP 4 177 186 B1**
(45) Date of publication and mention of the grant of the patent: **25.02.2026**
(21) Application number: 21905135.6
(22) Date of filing: 02.09.2021
(51) Int. Cl.: B65G 1/04

(54) **CHASSIS OF WAREHOUSING LOGISTICS VEHICLE, WAREHOUSING LOGISTICS VEHICLE, AND WAREHOUSING LOGISTICS SYSTEM**
RAHMEN FÜR LAGERHALTUNGSLOGISTIKFAHRZEUG, LAGERHALTUNGSLOGISTIKFAHRZEUG UND LAGERHALTUNGSLOGISTIKSYSTEM
CHÂSSIS DE VÉHICULE LOGISTIQUE D'ENTREPOSAGE, VÉHICULE LOGISTIQUE D'ENTREPOSAGE ET SYSTÈME LOGISTIQUE D'ENTREPOSAGE

(30) Priority: 18.12.2020 CN 202011504181
(43) Date of publication of application: 10.05.2023
(73) Proprietor: Beijing Jingdong Qianshi Technology Co., Ltd., Beijing 100176 (CN)
(72) Inventor: WANG, Xianwang, Beijing 100176 (CN); SONG, Guoku, Beijing 100176 (CN); WU, Mingfu, Beijing 100176 (CN)
(74) Representative: Page White Farrer
(86) International application number: PCT/CN2021/116197
(87) International publication number: WO 2022/127202

(56) References cited:
- WO-A1-2008/012989
- WO-A1-2018/189110
- WO-A1-2020/056175
- WO-A1-2020/056175
- CN-A- 110 329 707
- CN-A- 110 775 501
- CN-A- 111 517 048
- CN-A- 111 791 708
- CN-A- 112 660 679
- CN-U- 210 437 866

## Description

### Field of the Invention

The present disclosure relates to the technical field of logistics equipment, in particular to a chassis for a warehousing logistics vehicle, a warehousing logistics vehicle, and a warehousing logistics system.

### Background of the Invention

In a logistics system, a warehousing logistics vehicle is commonly used transfer equipment.

In the related art, a climbable warehousing logistics vehicle has a pair of climbing wheel and traveling wheel on each side of a vehicle body. Each pair of climbing wheel and traveling wheel is coaxially mounted to a set of rotary ball spline shaft assembly. A climbing wheel is mounted at one end of a spline shaft, and a traveling wheel is mounted at an end of a rotary spline housing. A nut outer flange of the rotary ball spline shaft assembly is fixedly mounted to a movable vehicle frame. The climbing wheel and the traveling wheel can move axially relative to each other. Moreover, the climbing wheel and the traveling wheel can rotate synchronously by means of transmission of the spline shaft and the rotary spline housing. The movable vehicle frame, the nut outer flange, the rotary spline housing and the traveling wheel can move axially relative to a first vehicle frame. A motor and a speed reducer are located on a fixed vehicle frame, and an output shaft thereof causes the spline housing to rotate. The spline housing is coaxial with the spline shaft and can cause the spline shaft to rotate. The climbing wheel and the spline shaft can move axially together relative to the motor, the speed reducer and the spline housing. When the vehicle body is traveling on horizontal rails or on the ground, the climbing wheel and the spline shaft are retracted to the interior of the vehicle body, and the climbing wheel is located inside the traveling wheel, and the movable vehicle frame, the nut outer flange, the rotary spline housing and the traveling wheel are located on a side away from the interior of the vehicle body.

In the above related art, when the warehousing logistics vehicle is climbing, the climbing wheel and the spline shaft are extended to the outside of the vehicle body and are located on a side away from the interior of the vehicle body, and the movable vehicle frame, the nut outer flange, the rotary spline housing and the traveling wheel are retracted towards the interior of the vehicle body and are located on a side close to the interior of the vehicle body.

WO2008012989A1 provides a conveyance mechanism having rails horizontally and vertically laid in a building. Racks are laid along the rails. Wheels are configured to travel on the rail, and a self-propelled carriage has pinions (33, 34) meshing with the racks and a drive section for the pinions and on which a load is placed.

WO2020056175A1 provides an automated order fulfillment system and mobile robot, where the mobile robot includes a compliant drive for moving between levels of a multilevel storage structure.

CN210437866U provides a warehousing robot including a climbing assembly and a bottom frame. The climbing assembly is used for being in butt joint with a rail on a goods shelf and driving the storage robot to climb along the goods shelf after butt joint is completed. The climbing assembly is in sliding connection with the bottom frame so that the climbing assembly can slide in the preset direction in the horizontal plane relative to the bottom frame in the butt joint process of the climbing assembly and the rail.

### Summary of the Invention

A first aspect of the present invention provides a chassis for a warehousing logistics vehicle, including a first vehicle frame and a traveling device mounted to the first vehicle frame, the traveling device including:
a first shaft mounted to the first vehicle frame;
a climbing wheel configured to cause the chassis to ascend/descend, and mounted to the first shaft;
a second shaft mounted to the first vehicle frame, and arranged in parallel with and spaced apart from the first shaft;
a traveling wheel configured to cause the chassis to travel, and mounted to the second shaft; and
a second extension/retraction drive mechanism, being in drive connection with the traveling wheel and configured to drive the traveling wheel to perform reciprocating movement transversely of the chassis.

In some embodiments, the chassis further includes a traveling drive mechanism, which is in drive connection with the first shaft and the second shaft to drive the first shaft and the second shaft to rotate.

In some embodiments,
the traveling drive mechanism includes a speed reducer and a speed reducer spline housing, an output shaft of the speed reducer being sleeved outside the speed reducer spline housing; and
the first shaft includes a first spline shaft, with a first spline being provided on the first spline shaft, the speed reducer spline housing cooperating with the first spline.

In some embodiments,
the traveling device includes a first rotary ball spline sleeve assembly, the first rotary ball spline sleeve assembly including a first outer flange and a first ball spline housing, the first outer flange being fixedly connected to the first vehicle frame; and the first shaft includes a first spline shaft, with a first spline being provided on the first spline shaft, the first ball spline housing cooperating with the first spline; and/or
the traveling device includes a second rotary ball spline sleeve assembly, the second rotary ball spline sleeve assembly including a second outer flange and a second ball spline housing, the second outer flange being fixedly connected to the first vehicle frame; and the second shaft includes a second spline shaft, with a second spline being provided on the second spline shaft, the second ball spline housing cooperating with the second spline.

In some embodiments, the chassis further includes a first extension/retraction drive mechanism, which is in drive connection with the climbing wheel and configured to drive the climbing wheel to perform reciprocating movement transversely of the chassis.

In some embodiments, the first extension/retraction drive mechanism includes:
a screw mounted to the first vehicle frame; and
a moving component in threaded fit with the screw, the first shaft being mounted to the moving component.

In some embodiments, the chassis further includes:
a first support wheel mounted to the first shaft;
a third shaft mounted to the first vehicle frame, and arranged spaced apart from and in parallel with the first shaft and the second shaft; and
a second support wheel mounted to the third shaft, the third shaft being arranged in linkage with the first shaft so that the second support wheel is fixed relative to the first support wheel transversely of the chassis.

In some embodiments, the axes of the first shaft, the second shaft and the third shaft are located in different planes.

In some embodiments, the second shaft and the third shaft are located below the first shaft.

In some embodiments, the first shaft, the second shaft and the third shaft are movably mounted to the first vehicle frame transversely of the chassis.

In some embodiments, the chassis further includes a second extension/retraction drive mechanism and a second vehicle frame, wherein the second extension/retraction drive mechanism is in drive connection with the traveling wheel and configured to drive the traveling wheel to perform reciprocating movement transversely of the chassis; the second vehicle frame is mounted to the second shaft in a rotatable and axially relatively stationary manner so as to move transversely with the traveling wheel relative to the first vehicle frame; and the third shaft passes through the second vehicle frame, and the second support wheel is mounted to an outer side transversely of the second vehicle frame.

A second aspect of the present disclosure provides a warehousing logistics vehicle including the chassis in the first aspect of the present disclosure.

A third aspect of the present disclosure provides a warehousing logistics system including:
horizontal rails;
vertical rails; and
the warehousing logistics vehicle in the second aspect of the present disclosure, the warehousing logistics vehicle having a traveling state in which the traveling wheels of the warehousing logistics vehicle travel along the horizontal rails, and an ascending/descending state in which the climbing wheels of the warehousing logistics vehicle ascend/descend along the vertical rails.

A chassis based on a warehousing logistics vehicle provided in the present disclosure uses a structure in which a climbing wheel and a traveling wheel are non-coaxial, which is conducive to improving the force-bearing condition of a first shaft.

The warehousing logistics vehicle and the warehousing logistics system provided in the present disclosure have the same advantages as the chassis for a warehousing logistics vehicle provided in the present disclosure.

Other features and advantages of the present disclosure will become apparent from the following detailed description of exemplary embodiments of the present disclosure with reference to the accompanying drawings.

### Brief Description of the Drawings

Drawings illustrated herein are used for providing further understanding of the present disclosure and form part of the present application, and illustrative embodiments of the present disclosure and description thereof are intended for explaining instead of improperly limiting the present disclosure. In the drawings:
Fig. 1 is a schematic structural diagram of a warehousing logistics system in embodiments of the present disclosure.
Fig. 2 is a schematic structural diagram of a warehousing logistics vehicle in embodiments of the present disclosure.
Fig. 3 is a schematic structural diagram of the warehousing logistics vehicle shown in Fig. 2 along a direction A-A.
Fig. 4 a schematic structural diagram of the warehousing logistics vehicle shown in Fig. 2 along a direction B-B.
Fig. 5 is a partial cross-sectional structural diagram of the warehousing logistics vehicle shown in Fig. 2.
Fig. 6 is a partial cross-sectional structural diagram of the warehousing logistics vehicle shown in Fig. 2.
Fig. 7 is a partial cross-sectional structural diagram of the warehousing logistics vehicle shown in Fig. 2.
Fig. 8 is a schematic structural diagram of the warehouse logistics system shown in Fig. 1 in which a warehousing logistics vehicle is in a traveling state.
Fig. 9 is a schematic structural diagram of the warehouse logistics system shown in Fig. 1 in which a warehousing logistics vehicle is switched from a traveling state to an ascending/descending state.
Fig. 10 is a schematic structural diagram of the warehouse logistics vehicle shown in Fig. 2 along a direction A-A in a traveling state and an ascending/descending state.
Fig. 11 is a schematic structural diagram of the warehouse logistics system shown in Fig. 1 in which a warehouse logistics vehicle is in an ascending/descending state.

### Detailed Description of the Embodiments

Technical solutions in the embodiments of the present disclosure will be described below clearly and completely in conjunction with the accompanying drawings in the embodiments of the present disclosure. Obviously, the described embodiments are only part of, instead of all of the embodiments of the present disclosure. The following description of at least one exemplary embodiment is actually only illustrative, and in no way serves as any limitation on the present disclosure and its application or use. Based on the embodiments in the present disclosure, all of other embodiments obtained by those of ordinary skill in the art without creative work should fall into the protection scope of the present disclosure.

Unless specifically stated otherwise, the relative arrangement of components and steps, numerical expressions and numerical values set forth in these embodiments do not limit the scope of the present disclosure. Furthermore, it should be appreciated that, for ease of description, the sizes of various parts shown in the drawings are not drawn in accordance with actual proportional relationships. Technologies, methods, and devices known to those of ordinary skill in the related art may be not discussed in detail, but where appropriate, the technologies, methods, and equipment should be regarded as part of the specification as granted. In all examples shown and discussed here, any specific value should be interpreted as merely exemplary, rather than as a limitation. Therefore, other examples of an exemplary embodiment may have different values. It should be noted that similar reference numerals and letters denote similar items in the following drawings, so once a certain item is defined in one drawing, it does not need to be further discussed in subsequent drawings.

In the description of the present disclosure, it should be understood that the use of terms such as "first" and "second" to define parts and components is only for the convenience of distinguishing the corresponding parts and components. Unless otherwise stated, the above terms have no special meanings, and therefore cannot be construed as limitations on the protection scope of the present disclosure.

In description of the present disclosure, it should be understood that orientation or position relations denoted by terms such as "front", "rear", "upper", "lower", "left", "right", "transverse", "longitudinal", "vertical", "horizontal", "top" and "bottom" are generally orientation or position relations illustrated based on the drawings, and are merely for the convenience of describing the present disclosure and simplifying description, and unless stated to the contrary, such terms do not indicate or imply the denoted devices or elements must have specific orientations or be constructed and operated in specific orientations, and thus cannot be construed as limiting the protection scope of the present disclosure; and orientation terms "inner" and "outer" refer to the inside and outside with respect to the contour of each component itself.

When a warehousing logistics vehicle of the related art is climbing, the length of a cantilever part of a spline shaft is relatively large. During climbing, the force-bearing condition of the spline shaft is relatively complicated, the weight of a vehicle body, and acting forces caused by an off-center weight, and a torque that transmits power of a motor all act on the spline shaft, and the spline shaft performs rotating movement, such that cyclic stress is present all over a cantilever shaft. Therefore, the diameter of the spline shaft is required to be large. A rotary ball spline shaft assembly with a large diameter is high in price and therefore results in a high cost of the whole vehicle. When the warehousing logistics vehicle is climbing, a climbing wheel and a support wheel respectively bear a rearward and a forward acting force caused by an off-center weight. Due to the force acting principle and geometric relationship, the climbing wheel and the support wheel need to be spaced by a certain distance in a vertical direction. Since the climbing wheel and the traveling wheel are coaxial, and the climbing wheel has a small outer diameter and the traveling wheel has a large outer diameter, the height of the vehicle body needs to be increased in order to keep a certain distance between the climbing wheel and the support wheel in the vertical direction. The increased height of the vehicle body causes a larger layer height of a cargo rack, which affects storage density.

To improve the warehousing logistics vehicle of the related art, embodiments of the present disclosure provide a warehousing logistics vehicle and a chassis therefor, and a warehousing logistics system including the warehousing logistics vehicle.

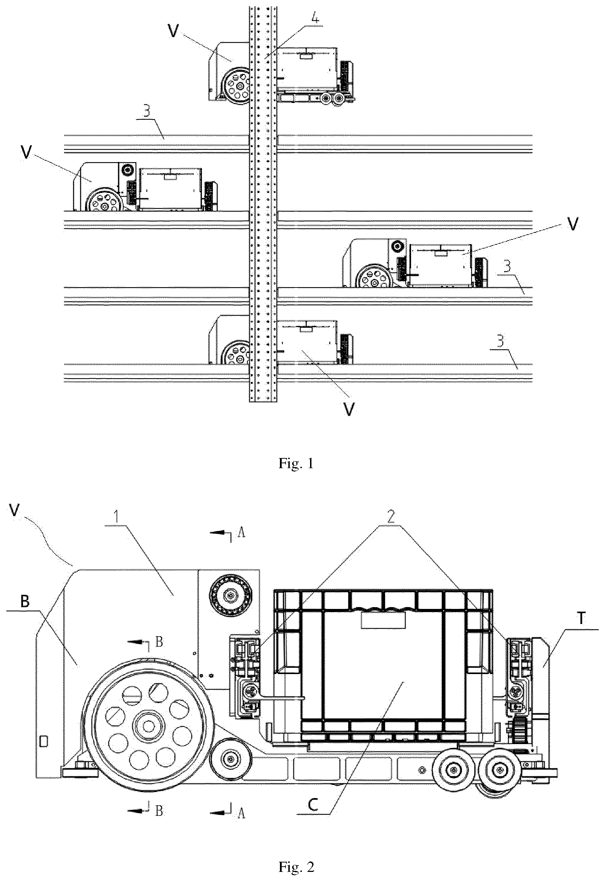

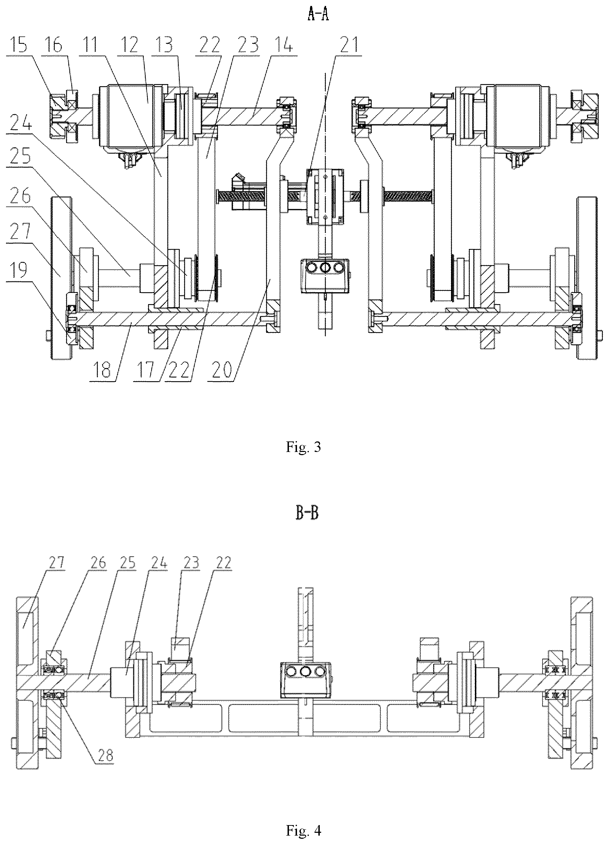

In the following description, the term "front" refers to a head direction of the warehousing logistics vehicle, the term "rear" refers to its tail direction, and the terms "left" and "right" refer to a left and a right direction when it faces forward. The left and the right direction is same as in Figs. 2 and 3. The term "longitudinal" refers to a front-rear direction of the warehousing logistics vehicle, and the term "transverse" refers to a left-right direction of the warehousing logistics vehicle.

As shown in Figs. 1 to 11, embodiments of the present disclosure provide a chassis 1 for a warehousing logistics vehicle, including a first vehicle frame 11 and a traveling device mounted to the first vehicle frame 11. The traveling device includes a first shaft 14, a climbing wheel 15, a second shaft 25 and a traveling wheel 27.

The first shaft 14 is mounted to the first vehicle frame 11. The climbing wheel 15 is configured to cause the chassis 1 to ascend/descend, and is mounted to the first shaft 14. The second shaft 25 is mounted to the first vehicle frame 11, and is arranged in parallel with and spaced apart from the first shaft 14. The traveling wheel 27 is configured to cause the chassis 1 to travel, and is mounted to the second shaft 25.

A warehousing logistics vehicle V of embodiments of the present disclosure uses a structure in which a climbing wheel 15 and a traveling wheel 27 are non-coaxial, which is conducive to improving the force-bearing condition of a first shaft 14. Further, it is conducive to reducing the diameter of the first shaft 14, thereby being conducive to reducing the cost of the whole vehicle on the one hand and being conducive to reducing the weight of the whole vehicle on the other hand.

As shown in Fig. 2, in some embodiments, the chassis 1 further includes a traveling drive mechanism. The traveling drive mechanism is in drive connection with the first shaft 14 and the second shaft 25 to drive the first shaft 14 and the second shaft 25 to rotate. The traveling drive mechanism includes, for example, a drive motor and a speed reducer.

In some embodiments, as shown in Fig. 2, the chassis 1 further includes a first extension/retraction drive mechanism. The first extension/retraction drive mechanism is in drive connection with the climbing wheel 15 and configured to drive the climbing wheel 15 to perform reciprocating movement transversely of the chassis 1.

The first extension/retraction drive mechanism includes, for example, a screw 21 and a moving component 20. The screw 21 is mounted to the first vehicle frame 11. The moving component 20 is in threaded fit with the screw 21, and the first shaft 14 is mounted to the moving component 20. When the screw 21 rotates, the moving component 20 can be driven to move axially of the screw 21, thereby causing the first shaft 14 to move and therefore causing the climbing wheel 15 to move. In an embodiment not illustrated, the first extension/retraction drive mechanism includes, for example, a linkage mechanism, a gear-rack mechanism, or the like.

In some embodiments, the chassis 1 further includes a second extension/retraction drive mechanism, which is in drive connection with the traveling wheel 27 and configured to drive the traveling wheel 27 to perform reciprocating movement transversely of the chassis 1.

The second extension/retraction drive mechanism includes, for example, a linear motor or combination of a rotary motor and a transmission part.

In some embodiments, as shown in Fig. 2, the chassis 1 further includes a first support wheel 16, a third shaft 18 and a second support wheel 19. The first support wheel 16 is mounted to the first shaft 14. The third shaft 18 is mounted to the vehicle frame 11, and is arranged spaced apart from and in parallel with the first shaft 14 and the second shaft 25. The second support wheel 19 is mounted to the third shaft 18. The third shaft 18 is arranged in linkage with the first shaft 14 so that the second support wheel 19 is fixed relative to the first support wheel 16 transversely of the chassis 1.

In some embodiments, the chassis 1 further includes a second vehicle frame 26, the second vehicle frame 26 being mounted to the second shaft 25 in a rotatable and axially relatively stationary manner so as to move transversely with the traveling wheel 27 relative to the first vehicle frame 11. The third shaft 18 passes through the second vehicle frame 26, and the second support wheel 19 is mounted to an outer side transversely of the second vehicle frame 26.

A warehousing logistics vehicle V of embodiments of the present disclosure includes the chassis 1 of embodiments of the present disclosure.

A warehousing logistics system of embodiments of the present disclosure includes horizontal rails 3, vertical rails 4 and a warehousing logistics vehicle V. The warehousing logistics vehicle V has a traveling state and an ascending/descending state. In the traveling state, the traveling wheel 27 of the warehousing logistics vehicle V travels along the horizontal rail 3. In the ascending/descending state, the climbing wheel 15 of the warehousing logistics vehicle V ascends/descends along the vertical rail 4.

The warehousing logistics vehicle V of embodiments of the present disclosure and the warehousing logistics system of embodiments of the present disclosure have the same advantages as the chassis for a warehousing logistics vehicle of embodiments of the present disclosure.

The warehousing logistics vehicle V and the chassis 1 therefor, and the warehousing logistics system including the warehousing logistics vehicle V, of embodiments of the present disclosure are further described below in conjunction with Figs. 1 to 11.

As shown in Fig. 1, the warehousing logistics system of embodiments of the present disclosure includes horizontal rails 3, vertical rails 4, and a warehousing logistics vehicle V. The numbers of the horizontal rails 3, the vertical rails 4 and the warehousing logistics vehicles V can all be configured as needed.

As shown in Fig. 2, the warehousing logistics vehicle V mainly includes a chassis 1 and an upper structure 2. The chassis 1 has functions of traveling on the ground, traveling on the horizontal rails and climbing vertically. A head H of the warehousing logistics vehicle V is located at one end of the chassis 1 (left end in Fig. 2). A power source, a power and transmission mechanism, a control part and a navigation part of the warehousing logistics vehicle V are located in the head H. The upper structure 2 functions as a place from which a cargo box B is picked up and to which a cargo box B is put. The upper structure 2 is located at the other end of the chassis 1 (right end in Fig. 2).

As shown in Figs. 3 to 11, the chassis 1 includes a vehicle frame 11 and a traveling device mounted to the vehicle frame 11. The traveling device of the chassis 1 is a left-right symmetrical structure, including two traveling parts located on the left and right sides of the chassis 1 and symmetrically arranged with respect to a longitudinal axis of the chassis 1. As shown in Fig. 2, the traveling part located on the left side is described below as an example. The traveling part located on the right side is same as the traveling part on the left side in terms of its structure, functions of components and its operation process and principle, and will not to be described separately.

The traveling part includes a first shaft 14, a climbing wheel 15, a second shaft 25, and a traveling wheel 27. The first shaft 14 is mounted to the first vehicle frame 11. The climbing wheel 15 is configured to cause the chassis 1 to ascend/descend, and is mounted to the first shaft 14. The second shaft 25 is mounted to the first vehicle frame 11, and is arranged in parallel with and spaced apart from the first shaft 14. The traveling wheel 27 is configured to cause the chassis 1 to travel, and is mounted to the second shaft 25.

The first shaft 14 is configured as a first spline shaft provided with a first spline. The second shaft 25 is in this embodiment a second spline shaft provided with a second spline. The climbing wheel 15 includes a climbing gear.

The chassis 1 further includes a traveling drive mechanism. The traveling drive mechanism is in drive connection with the first shaft 14 and the second shaft 25 to drive the first shaft 14 and the second shaft 25 to rotate. The traveling drive mechanism includes a traveling drive motor (not shown) and a speed reducer 12. The first shaft 14 and the second shaft 25 are driven by the speed reducer 12 to rotate.

As shown in Fig. 2, the chassis 1 further includes a first extension/retraction drive mechanism, which is in drive connection with the climbing wheel 15. The first extension/retraction drive mechanism is configured to drive the climbing wheel 15 to perform reciprocating movement transversely of the chassis 1. The first extension/retraction drive mechanism includes a screw 21 and a moving component 20. The screw 21 is mounted to the first vehicle frame 11. The moving component 20 is in threaded fit with the screw 21, and the first shaft 14 is mounted to the moving component 20. When the screw 21 rotates, the moving component 20 can be driven to move axially of the screw 21, thereby causing the first shaft 14 to move and therefore causing the climbing wheel 15 to move. The screw 21 can be driven, for example, by a rotary motor.

The chassis 1 further includes a second extension/retraction drive mechanism, which is in drive connection with the traveling wheel 27. The second extension/retraction drive mechanism is configured to drive the traveling wheel 27 to perform reciprocating movement transversely of the chassis 1.

The second extension/retraction drive mechanism includes, for example, a linear motor. The linear motor can push and pull the traveling wheel 27 to perform reciprocating movement in its axial direction. Alternatively, the second extension/retraction drive mechanism is a combined mechanism of a rotary motor and a transmission part arranged between the rotary motor and the traveling wheel 27. The rotary motor causes the transmission part to operate, thereby causing the traveling wheel 27 to perform reciprocating movement in its axis direction.

As shown in Fig. 2, the chassis 1 further includes a first support wheel 16, a third shaft 18 and a second support wheel 19. The first support wheel 16 is mounted to the first shaft 14. The third shaft 18 is mounted to the vehicle frame 11, and is arranged spaced apart from and in parallel with the first shaft 14 and the second shaft 25. The second support wheel 19 is mounted to the third shaft 18. The second support wheel 19 is arranged in linkage with the first support wheel 16, so as to be fixed relative to the first support wheel 16 transversely of the chassis 1.

The first shaft 14, the second shaft 25 and the third shaft 18 are movably mounted to the first vehicle frame 11 transversely of the chassis 1.

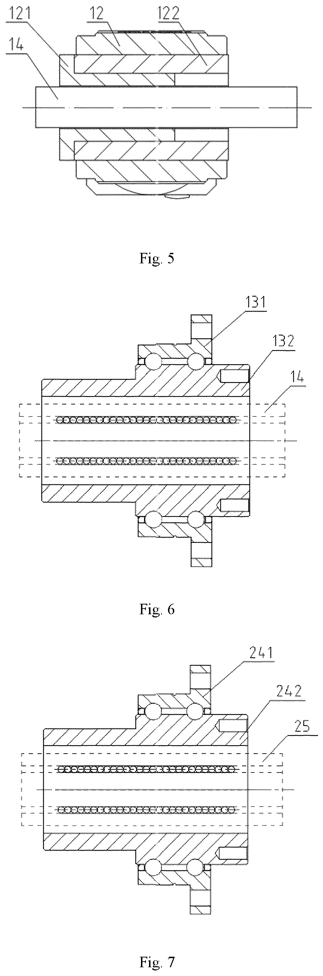

As shown in Fig. 5, the traveling drive mechanism includes a speed reducer 12 and a speed reducer spline housing 121. The speed reducer spline housing 121 is mounted between an output shaft 122 of the speed reducer 12 and the first shaft 14. The speed reducer 12 is fixedly mounted to an outer side transversely of the first vehicle frame 11, and can drive, by means of the output shaft 122, the speed reducer spline housing 121 to rotate. A first rotary ball spline sleeve assembly 13 is mounted to an inner side transversely of the first vehicle frame 11 by means of a first outer flange 131 thereof, and is coaxial with the output shaft 122 of the speed reducer 12.

The first shaft 14 passes through the first rotary ball spline sleeve assembly 13, the output shaft 122 of the speed reducer 12, and the speed reducer spline housing 121 successively. Both the speed reducer spline housing 121 and a first ball spline housing 132 of the first rotary ball spline sleeve assembly 13 cooperate with the first spline on the first shaft 14, such that the speed reducer 12 can cause, by means of the speed reducer spline housing 121, the first shaft 14 and the first ball spline housing 132 to rotate. Furthermore, the first shaft 14 can move axially relative to the speed reducer 12 and the first rotary ball spline sleeve assembly 13. The climbing wheel 15 and the first support wheel 16 are mounted at an end of the first shaft 14 close to an outer side of a vehicle body.

The traveling part further includes a guide sleeve 17. The third shaft 18 and the guide sleeve 17 are mounted coaxially at a lower part of the first vehicle frame 11, parallel to and at a certain distance below the first shaft 14. The guide sleeve 17 is fixed to the first vehicle frame 11, and the third shaft 18 can move axially relative to the guide sleeve 17. An end of the third shaft 18 close to a transversely outer side passes through a movable second vehicle frame 26 and is installed with the second support wheel 19. The third shaft 18 does not contact the second vehicle frame 26, or it slidably cooperates with the same axially of the third shaft 18. The other ends of the first shaft 14 and the third shaft 18 are connected to the moving component 20. The moving component 20 can be a plate member, a rod member, or the like.

The screw 21 is located in the middle of the vehicle body, and the screw 21 has threads for left-hand and right-hand rotations. Driven by the screw 21, the two moving components 20 on the left and right can symmetrically move transversely of the chassis 1, thereby causing the first shaft 14, the climbing wheel 15, the first support wheel 16, the third shaft 18 and the second support wheel 19 to move transversely of the chassis 1 at the same time.

The axes of the first shaft 14, the second shaft 25 and the third shaft 18 are located in different planes. The second shaft 25 and the third shaft 18 are located below the first shaft 14. As shown in Fig. 2, the second shaft 25 is parallel to and at a certain distance below the first shaft 14, but not in a plane formed by the first shaft 14 and the third shaft 18. A second outer flange 241 of a second rotary ball spline sleeve assembly 24 is fixedly mounted to the first vehicle frame 11, and the second shaft 25 passes through the second rotary ball spline sleeve assembly 24 and a second spline thereon can cooperate with a second ball spline housing 242 of the second rotary ball spline sleeve assembly 24, so the second shaft 25 rotates synchronously with the second ball spline housing 242.

As shown in Fig. 4, one end of the second shaft 25 is connected to the second vehicle frame 26 by means of a bearing 28, and is installed with the traveling wheel 27.

A transmission wheel 22 is mounted at an end, close to a transversely inner side, of each of the second ball spline housing 242 of the second rotary ball spline sleeve assembly 24 and the first ball spline housing 132 of the first rotary ball spline sleeve assembly 13. The two transmission wheels 22 are mounted to the first shaft 14 and the second shaft 25, respectively, and can rotate with the first shaft 14 and the second shaft 25, respectively, and a transmission belt 23 connects the two transmission wheels 22, so rotation of the first shaft 14 can cause the second shaft 25 and the traveling wheel 27 to rotate, by means of the first ball spline housing 132, the transmission wheel 22 on the first shaft 14, the transmission belt 23 and the transmission wheels 22 on the second shaft 25.

The second vehicle frame 26, the bearing 28, the second shaft 25 and the traveling wheel 27 can move transversely at the same time under the drive of the second extension/retraction drive mechanism. The second extension/retraction drive mechanism includes, for example, a rotary motor and a transmission mechanism. The transmission mechanism includes, for example, a screw-nut transmission pair, a linkage mechanism, a gear-rod transmission pair, a cam-lever transmission pair, or the like.

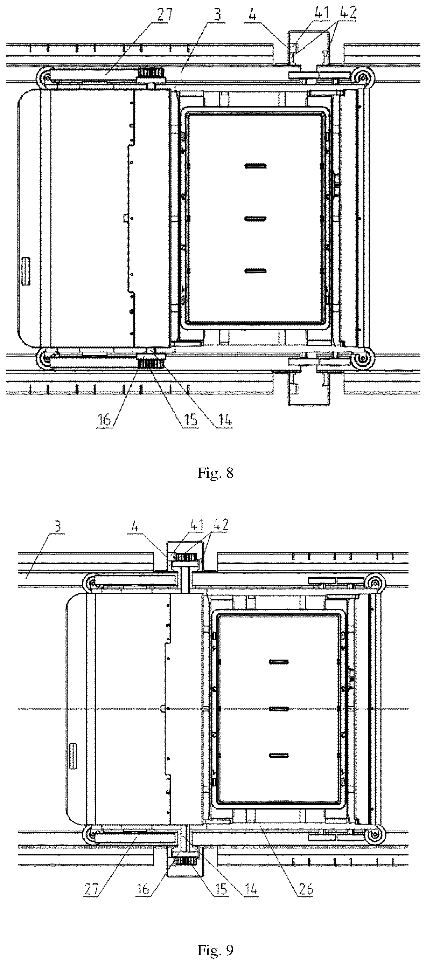

Fig. 8 shows a state of a warehousing logistics vehicle V traveling normally on horizontal rails 3. In this case, the warehousing logistics vehicle V is in its traveling state. The second vehicle frame 26, the bearing 28, the second shaft 25 and the traveling wheel 27 are in an extended position away from the first vehicle frame 11, and the traveling wheel 27 is on an upper surface of the horizontal rail 3. The first shaft 14, the climbing wheel 15, the first support wheel 16, the third shaft 18 and the second support wheel 19 are in a retracted position towards the first vehicle frame 11, and the warehousing logistics vehicle V can travel on the horizontal rails 3 at a fast speed.

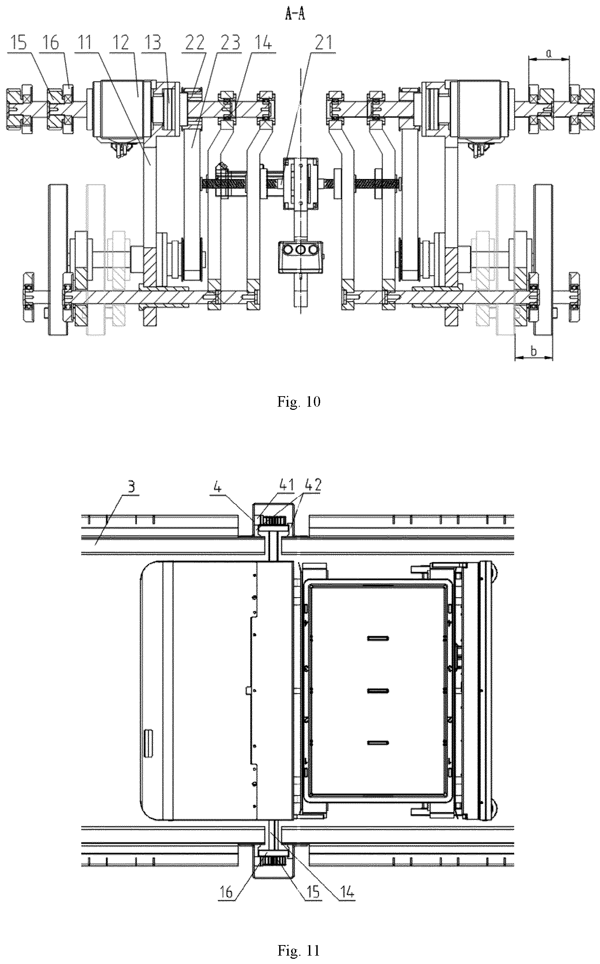

As shown in Fig. 9, when the warehousing logistics vehicle V is in the climbing state, the first shaft 14, the climbing wheel 15, the first support wheel 16, the third shaft 18 and the second support wheel 19 are simultaneously extended to a side away from the first vehicle frame 11 and enters an extended position, gear teeth on the climbing wheel 15 engages a rack 41 of the vertical rail 4, the first support wheel 16 and the second support wheel 19 are located between limiting strips 42 of the vertical rail 4, and the climbing wheel 15 rotates such that the warehousing logistics vehicle V can ascend in a certain range. As shown in Fig. 11, after the warehousing logistics vehicle V ascends a small height, the second vehicle frame 26, the bearing 28, the second shaft 25 and the traveling wheel 27, driven by the second extension/retraction drive mechanism, move toward a side close to the first vehicle frame 11 and enters a retracted position such that the horizontal rails 3 can be avoided when the warehousing logistics vehicle V moves up and down, and the warehousing logistics vehicle V is switched to an ascending/descending state such that the warehousing logistics vehicle V can ascend/descend along the vertical rails 4 all the way.

As shown in Fig. 10, the first shaft 14, the force-bearing condition of which is the most complex, reaches a maximum cantilever length when in the ascending/descending state, which is one extension/retraction stroke a of the first shaft 14 larger than its cantilever length in the traveling state. In the related art, since extension and retraction of a climbing wheel and a traveling wheel need to be implemented on the same axis, a spline shaft has a larger cantilever length in an ascending/descending state than in a traveling state. Thus, the structure in which a climbing wheel 15 and a traveling wheel 27 of a warehousing logistics vehicle V of embodiments of the present disclosure are non-coaxial is conducive to improving the force-bearing condition of a first shaft 14, and can achieved a reduced diameter of the first shaft 14, thereby reducing the cost of the whole vehicle on the one hand and reducing the weight of the whole vehicle on the other hand.

The structure in which the climbing wheel 15 and the traveling wheel 27 are configured to be non-coaxial is also conducive to reducing the heights of the first shaft 14 and the third shaft 18 on the warehousing logistics vehicle V while maintaining a fixed vertical distance between the first shaft 14 and the third shaft 18, thereby reducing the height of the whole vehicle and providing the possibility of a reduced layer height of a cargo rack to ensure storage density.

In addition, the first shaft 14 and the third shaft 18 can be closer to the center of gravity of the warehousing logistics vehicle V (between the traveling wheel 27 and a tail T), thereby reducing forward and rearward acting forces caused by an off-center weight on the climbing wheel 15 and the first support wheel 16 and second support wheel 19.

Combining the speed reducer 12 of the traveling drive mechanism together with the speed reducer spline housing 121 is conducive to outward shifting of its position. This, in combination with the structure in which the traveling wheel 27 and the climbing wheel 15 are non-coaxial, achieves that the left-right extension and retraction of the second vehicle frame 26 and the traveling wheel 27 do not influence the cantilever length of the first shaft 14, and the cantilever length of the first shaft 14 is reduced when the warehousing logistics vehicle V ascends/descends, which is conducive to further improving the force-bearing condition of the first shaft 14.

A space above the upper structure 2 is fully used to arrange the climbing wheel 15 and the first support wheel 16, which is conducive to reducing a longitudinal distance between the upper structure 2 and the climbing wheel 15 and shortening the length of the whole vehicle.

## Claims

1. A chassis for a warehousing logistics vehicle, comprising a first vehicle frame (11) and a traveling device mounted to the first vehicle frame (11), the traveling device comprising:
a first shaft (14), mounted to the first vehicle frame (11);
a climbing wheel (15), mounted to the first shaft (14) to cause the chassis (1) to ascend/descend;
a second shaft (25), mounted to the first vehicle frame (11) and arranged in parallel with and spaced apart from the first shaft (14); and
a traveling wheel (27) mounted to the second shaft (25) to cause the chassis (1) to travel;
**characterized in that** the traveling device further comprises:
a second extension/retraction drive mechanism, being in drive connection with the traveling wheel (27) and configured to drive the traveling wheel (27) to perform reciprocating movement transversely of the chassis (1).

2. The chassis according to claim 1, further comprising a traveling drive mechanism in drive connection with the first shaft (14) and the second shaft (25) to drive the first shaft (14) and the second shaft (25) to rotate.

3. The chassis according to claim 1 or 2, wherein
the traveling drive mechanism comprises a speed reducer (12) and a speed reducer spline housing (121), an output shaft (122) of the speed reducer (12) being sleeved outside the speed reducer spline housing (121); and
the first shaft (14) comprises a first spline shaft, with a first spline being provided on the first spline shaft, the speed reducer spline housing (121) cooperating with the first spline.

4. The chassis according to any one of claims 1 to 3, wherein
the traveling device comprises a first rotary ball spline sleeve assembly (13), the first rotary ball spline sleeve assembly (13) comprising a first outer flange (131) and a first ball spline housing (132), the first outer flange (131) being fixedly connected to the first vehicle frame (11); and the first shaft (14) comprises a first spline shaft, with a first spline being provided on the first spline shaft, the first ball spline housing (132) cooperating with the first spline; and/or
the traveling device comprises a second rotary ball spline sleeve assembly (24), the second rotary ball spline sleeve assembly (24) comprising a second outer flange (241) and a second ball spline housing (242), the second outer flange (241) being fixedly connected to the first vehicle frame (11); and the second shaft (25) comprises a second spline shaft, with a second spline being provided on the second spline shaft, the second ball spline housing (242) cooperating with the second spline.

5. The chassis according to any one of claims 1 to 4, further comprising a first extension/retraction drive mechanism, which is in drive connection with the climbing wheel (15) and configured to drive the climbing wheel (15) to perform reciprocating movement transversely of the chassis (1).

6. The chassis according to claim 5, wherein the first extension/retraction drive mechanism comprises:
a screw (21) mounted to the first vehicle frame (11); and
a moving component (20) in threaded fit with the screw (21), the first shaft (14) being mounted to the moving component (20).

7. The chassis according to any one of claims 1 to 6, further comprising:
a first support wheel (16) mounted to the first shaft (14);
a third shaft (18) mounted to the first vehicle frame (11), and arranged spaced apart from and in parallel with the first shaft (14) and the second shaft (25); and
a second support wheel (19) mounted to the third shaft (18), the third shaft (18) being arranged in linkage with the first shaft (14) so that the second support wheel (19) is fixed relative to the first support wheel (16) transversely of the chassis (1).

8. The chassis according to claim 7, wherein the axes of the first shaft (14), the second shaft (25) and the third shaft (18) are located in different planes.

9. The chassis according to claim 6 or 7, wherein the second shaft (25) and the third shaft (18) are located below the first shaft (14).

10. The chassis according to any one of claims 7 to 9, wherein the first shaft (14), the second shaft (25) and the third shaft (18) are movably mounted to the first vehicle frame (11) transversely of the chassis (1).

11. The chassis according to any one of claims 7 to 10, further comprising a second extension/retraction drive mechanism and a second vehicle frame (26), wherein the second extension/retraction drive mechanism is in drive connection with the traveling wheel (27) and configured to drive the traveling wheel (27) to perform reciprocating movement transversely of the chassis (1); the second vehicle frame (26) is mounted to the second shaft (25) in a rotatable and axially relatively stationary manner so as to move transversely with the traveling wheel (27) relative to the first vehicle frame (11); and the third shaft (18) passes through the second vehicle frame (26), and the second support wheel (19) is mounted to an outer side transversely of the second vehicle frame (26).

12. A warehousing logistics vehicle, comprising the chassis (1) of any one of claims 1 to 11.

13. A warehousing logistics system, comprising:
a horizontal rail (3);
a vertical rail (4); and
the warehousing logistics vehicle (V) according to claim 12, the warehousing logistics vehicle (V) having a traveling state in which the traveling wheels (27) of the warehousing logistics vehicle (V) travel along the horizontal rails (3), and an ascending/descending state in which the climbing wheels (15) of the warehousing logistics vehicle (V) ascend/descend along the vertical rails (4).

## Patentansprüche

1. Chassis für ein Lagerlogistikfahrzeug, umfassend einen ersten Fahrzeugrahmen (11) und eine an dem ersten Fahrzeugrahmen (11) befestigte Fahrvorrichtung, die Fahrvorrichtung umfassend:
eine erste Welle (14), die an dem ersten Fahrzeugrahmen (11) befestigt ist;
ein Kletterrad (15), das an der ersten Welle (14) befestigt ist, um das Chassis (1) auf- und absteigen zu lassen;
eine zweite Welle (25), die an dem ersten Fahrzeugrahmen (11) befestigt ist und parallel und beabstandet zu der ersten Welle (14) angeordnet ist; und
ein Laufrad (27), das an der zweiten Welle (25) befestigt ist, um das Chassis (1) zu bewegen;
**dadurch gekennzeichnet, dass** die Fahrvorrichtung ferner Folgendes umfasst:
einen zweiten Ausfahr-/Einzieh-Antriebsmechanismus, der in Antriebsverbindung mit dem Laufrad (27) steht und konfiguriert ist, um das Laufrad (27) anzutreiben, um eine transversale Hin- und Herbewegung des Chassis (1) auszuführen.

2. Chassis nach Anspruch 1, ferner umfassend einen Fahrantriebsmechanismus in Antriebsverbindung mit der ersten Welle (14) und der zweiten Welle (25), um die erste Welle (14) und die zweite Welle (25) zu drehen.

3. Chassis nach Anspruch 1 oder 2, wobei
der Fahrantriebsmechanismus ein Reduziergetriebe (12) und ein Reduziergetriebe-Keilwellengehäuse (121) umfasst, wobei eine Ausgangswelle (122) des Reduziergetriebes (12) außerhalb des Reduziergetriebe-Keilwellengehäuses (121) mit einer Hülse versehen ist; und
die erste Welle (14) eine erste Keilwelle umfasst, wobei auf der ersten Keilwelle ein erster Keil bereitgestellt ist und das Keilwellengehäuse (121) des Untersetzungsgetriebes mit dem ersten Keil zusammenwirkt.

4. Chassis nach einem der Ansprüche 1 bis 3, wobei
die Fahrvorrichtung eine erste drehbare Kugelkeilhülsenbaugruppe (13) umfasst, wobei die erste drehbare Kugelkeilhülsenbaugruppe (13) einen ersten Außenflansch (131) und ein erstes Kugelkeilgehäuse (132) umfasst, wobei der erste Außenflansch (131) fest mit dem ersten Fahrzeugrahmen (11) verbunden ist; und die erste Welle (14) eine erste Keilwelle umfasst, wobei eine erste Keilwelle auf der ersten Keilwelle bereitgestellt wird, wobei das erste Kugelkeilgehäuse (132) mit der ersten Keilwelle zusammenwirkt; und/oder
die Fahrvorrichtung eine zweite drehbare Kugelkeilhülsenbaugruppe (24) umfasst, wobei die zweite drehbare Kugelkeilhülsenbaugruppe (24) einen zweiten Außenflansch (241) und ein zweites Kugelkeilgehäuse (242) umfasst, wobei der zweite Außenflansch (241) fest mit dem ersten Fahrzeugrahmen (11) verbunden ist; und die zweite Welle (25) eine zweite Keilwelle umfasst, wobei eine zweite Keilwelle auf der zweiten Keilwelle bereitgestellt ist, wobei das zweite Kugelkeilgehäuse (242) mit der zweiten Keilwelle zusammenwirkt.

5. Chassis nach einem der Ansprüche 1 bis 4, ferner umfassend einen ersten Ausfahr-/Einfahr-Antriebsmechanismus, der in Antriebsverbindung mit dem Kletterrad (15) steht und konfiguriert ist, um das Kletterrad (15) anzutreiben, um eine transversale Hin- und Herbewegung des Chassis (1) auszuführen.

6. Chassis nach Anspruch 5, wobei der erste Ausfahr-/Einfahr-Antriebsmechanismus Folgendes umfasst:
eine am ersten Fahrzeugrahmen (11) befestigte Schraube (21); und
eine bewegliche Komponente (20) in Gewindepassung mit der Schraube (21), wobei die erste Welle (14) an der beweglichen Komponente (20) befestigt ist.

7. Chassis nach einem der Ansprüche 1 bis 6, ferner umfassend:
ein erstes an der ersten Welle (14) befestigtes Stützrad (16) ;
eine dritte Welle (18), die an dem ersten Fahrzeugrahmen (11) befestigt ist und im Abstand von und parallel zu der ersten Welle (14) und der zweiten Welle (25) angeordnet ist; und
ein zweites Stützrad (19), das an der dritten Welle (18) befestigt ist, wobei die dritte Welle (18) in Verbindung mit der ersten Welle (14) angeordnet ist, sodass das zweite Stützrad (19) in Bezug auf das erste Stützrad (16) transversal zum Chassis (1) befestigt ist.

8. Chassis nach Anspruch 7, wobei sich die Achsen der ersten Welle (14), der zweiten Welle (25) und der dritten Welle (18) in unterschiedlichen Ebenen befinden.

9. Chassis nach Anspruch 6 oder 7, wobei die zweite Welle (25) und die dritte Welle (18) unterhalb der ersten Welle (14) angeordnet sind.

10. Chassis nach einem der Ansprüche 7 bis 9, wobei die erste Welle (14), die zweite Welle (25) und die dritte Welle (18) quer zum Chassis (1) beweglich am ersten Fahrzeugrahmen (11) befestigt sind.

11. Chassis nach einem der Ansprüche 7 bis 10, ferner umfassend einen zweiten Ausfahr-/Einzieh-Antriebsmechanismus und einen zweiten Fahrzeugrahmen (26), wobei der zweite Ausfahr-/Einzieh-Antriebsmechanismus in Antriebsverbindung mit dem Laufrad (27) steht und konfiguriert ist, um das Laufrad (27) anzutreiben, um eine Hin- und Herbewegung transversal zum Chassis (1) auszuführen; der zweite Fahrzeugrahmen (26) an der zweiten Welle (25) drehbar und axial relativ ortsfest befestigt ist, um sich mit dem Laufrad (27) relativ zum ersten Fahrzeugrahmen (11) quer zu bewegen; und die dritte Welle (18) durch den zweiten Fahrzeugrahmen (26) verläuft und das zweite Stützrad (19) an einer Außenseite quer zum zweiten Fahrzeugrahmen (26) befestigt ist.

12. Lagerlogistikfahrzeug, umfassend das Chassis (1) nach einem der Ansprüche 1 bis 11.

13. Lagerlogistiksystem, umfassend:
eine horizontale Schiene (3);
eine vertikale Schiene (4); und
das Lagerlogistikfahrzeug (V) nach Anspruch 12, wobei das Lagerlogistikfahrzeug (V) einen Fahrzustand, in dem die Laufräder (27) des Lagerlogistikfahrzeugs (V) entlang der horizontalen Schienen (3) fahren, und einen Steig-/Sinkzustand aufweist, in dem die Steigräder (15) des Lagerlogistikfahrzeugs (V) entlang der vertikalen Schienen (4) aufsteigen/absteigen.

## Revendications

1. Châssis de véhicule logistique d'entreposage, comprenant un premier cadre de véhicule (11) et un dispositif de déplacement monté sur le premier cadre de véhicule (11), le dispositif de déplacement comprenant :
un premier arbre (14), monté sur le premier cadre de véhicule (11) ;
une roue grimpante (15), montée sur le premier arbre (14) pour amener le châssis (1) à monter/descendre ;
un deuxième arbre (25), monté sur le premier cadre de véhicule (11) et disposé parallèlement au premier arbre (14) et espacé de celui-ci ; et
une roue de déplacement (27) montée sur le deuxième arbre (25) pour amener le châssis (1) à se déplacer ;
**caractérisé en ce que** le dispositif de déplacement comprend en outre :
un second mécanisme d'entraînement d'extension/rétraction, étant en liaison d'entraînement avec la roue de déplacement (27) et configuré pour entraîner la roue de déplacement (27) pour réaliser un mouvement de va-et-vient transversalement au châssis (1).

2. Châssis selon la revendication 1, comprenant en outre un mécanisme d'entraînement de déplacement en liaison d'entraînement avec le premier arbre (14) et le deuxième arbre (25) pour entraîner le premier arbre (14) et le deuxième arbre (25) en rotation.

3. Châssis selon la revendication 1 ou 2, dans lequel le mécanisme d'entraînement de déplacement comprend un réducteur de vitesse (12) et un logement de cannelure de réducteur de vitesse (121), un arbre de sortie (122) du réducteur de vitesse (12) étant emmanché à l'extérieur du logement de cannelure de réducteur de vitesse (121) ; et
le premier arbre (14) comprend un premier arbre cannelé, une première cannelure étant prévue sur le premier arbre cannelé, le logement de cannelure de réducteur de vitesse (121) coopérant avec la première cannelure.

4. Châssis selon l'une quelconque des revendications 1 à 3, dans lequel
le dispositif de déplacement comprend un premier ensemble de manchon à cannelure à billes rotatif (13), le premier ensemble de manchon à cannelure à billes rotatif (13) comprenant une première bride extérieure (131) et un premier logement de cannelure à billes (132), la première bride extérieure (131) étant fixée de manière solidaire au premier cadre de véhicule (11) ; et le premier arbre (14) comprend un premier arbre cannelé, une première cannelure étant prévue sur le premier arbre cannelé, le premier logement de cannelure à billes (132) coopérant avec la première cannelure ; et/ou
le dispositif de déplacement comprend un second ensemble de manchon à cannelure à billes rotatif (24), le second ensemble de manchon à cannelure à billes rotatif (24) comprenant une seconde bride extérieure (241) et un second logement de cannelure à billes (242), la seconde bride extérieure (241) étant fixée de manière solidaire au premier cadre de véhicule (11) ; et le deuxième arbre (25) comprend un deuxième arbre cannelé, une seconde cannelure étant prévue sur le deuxième arbre cannelé, le second logement de cannelure à billes (242) coopérant avec la seconde cannelure.

5. Châssis selon l'une quelconque des revendications 1 à 4, comprenant en outre un premier mécanisme d'entraînement d'extension/rétraction, lequel est en liaison d'entraînement avec la roue grimpante (15) et configuré pour entraîner la roue grimpante (15) pour réaliser un mouvement de va-et-vient transversalement au châssis (1).

6. Châssis selon la revendication 5, dans lequel le premier mécanisme d'entraînement d'extension/rétraction comprend :
une vis (21) montée sur le premier cadre de véhicule (11) ; et
un composant mobile (20) en ajustement fileté avec la vis (21), le premier arbre (14) étant monté sur le composant mobile (20).

7. Châssis selon l'une quelconque des revendications 1 à 6, comprenant en outre :
une première roue de support (16) montée sur le premier arbre (14) ;
un troisième arbre (18) monté sur le premier cadre de véhicule (11), et disposé de manière espacée et parallèlement au premier arbre (14) et au deuxième arbre (25) ; et
une seconde roue de support (19) montée sur le troisième arbre (18), le troisième arbre (18) étant agencé en liaison avec le premier arbre (14) de sorte que la seconde roue de support (19) soit fixe par rapport à la première roue de support (16) transversalement au châssis (1).

8. Châssis selon la revendication 7, dans lequel les axes du premier arbre (14), du deuxième arbre (25) et du troisième arbre (18) sont situés dans des plans différents.

9. Châssis selon la revendication 6 ou 7, dans lequel le deuxième arbre (25) et le troisième arbre (18) sont situés sous le premier arbre (14).

10. Châssis selon l'une quelconque des revendications 7 **à 9,** dans lequel le premier arbre (14), le deuxième arbre (25) et le troisième arbre (18) sont montés de manière mobile sur le premier cadre de véhicule (11) transversalement au châssis (1).

11. Châssis selon l'une quelconque des revendications 7 à 10, comprenant en outre un second mécanisme d'entraînement d'extension/rétraction et un second cadre de véhicule (26), dans lequel le second mécanisme d'entraînement d'extension/rétraction est en liaison d'entraînement avec la roue de déplacement (27) et configuré pour entraîner la roue de déplacement (27) à réaliser un mouvement de va-et-vient transversalement au châssis (1) ; le second cadre de véhicule (26) est monté sur le deuxième arbre (25) d'une manière rotative et axialement relativement fixe de façon à se déplacer transversalement avec la roue de déplacement (27) par rapport au premier cadre de véhicule (11) ; et le troisième arbre (18) traverse le second cadre de véhicule (26), et la seconde roue de support (19) est montée sur un côté extérieur transversalement au second cadre de véhicule (26).

12. Véhicule logistique d'entreposage, comprenant le châssis (1) selon l'une quelconque des revendications 1 à 11.

13. Système logistique d'entreposage, comprenant :
un rail horizontal (3) ;
un rail vertical (4) ; et
le véhicule logistique d'entreposage (V) selon la revendication 12, le véhicule logistique d'entreposage (V) présentant un état de déplacement dans lequel les roues de déplacement (27) du véhicule logistique d'entreposage (V) se déplacent le long des rails horizontaux (3), et un état de montée/descente dans lequel les roues grimpantes (15) du véhicule logistique d'entreposage (V) montent/descendent le long des rails verticaux (4).
